# EUROPEAN PATENT APPLICATION

(11) **EP 4 811 510 A1**
(43) Date of publication of application: **23.09.2026**
(21) Application number: 26165911.4
(22) Date of filing: 18.03.2026
(51) Int. Cl.: H01M 50/176, H01M 50/528, H01M 50/54, H01M 50/553, H01M 50/566

(54) **CURRENT COLLECTOR AND BATTERY CELL HAVING THE SAME**

(30) Priority: 19.03.2025 KR 20250035184; 06.02.2026 KR 20260024289
(71) Applicant: SK On Co., Ltd., Seoul 03161 (KR)
(72) Inventor: PARK, Seong Che, Daejeon 34124 (KR); CHEONG, Hoemin, Daejeon 34124 (KR); KWAK, Seung Ho, Daejeon 34124 (KR); JU, Seung Hoon, Daejeon 34124 (KR)
(74) Representative: Stolmár & Partner Patentanwälte PartG mbB

(57) **Abstract**

A battery cell is disclosed. In some implementations, the battery cell includes: an electrode assembly including a cathode, an anode, and a separator; a cell case accommodating the electrode assembly; a cap plate connected to the cell case; an electrode terminal disposed in the cap plate and including a coupling hole; and a current collector electrically connecting the electrode assembly and the electrode terminal, wherein the current collector includes a current collecting plate electrically connected to the electrode assembly and a current collecting pin connected to the current collecting plate and welded to the electrode terminal in a state of being fitted into the coupling hole, and the current collecting pin includes a hollow portion recessed toward the current collecting plate at a first end spaced apart from the current collecting plate.

## Description

### TECHNICAL FIELD

The disclosure and implementations disclosed in this patent document generally relate to a current collector applied to a battery cell (secondary battery) capable of being charged with and discharging electricity, and a battery cell having the same.

### BACKGROUND

Unlike a primary battery, a secondary battery is capable of being charged with and discharging electricity and may thus be applied to devices within various fields such as a digital camera, a mobile phone, a laptop computer, a hybrid vehicle, and an electric vehicle.

Such a secondary battery may be manufactured as a pouch-type cell having flexibility or as a can-type cell having rigidity. The can-type cell may be classified into a prismatic cell, a cylindrical cell, a coin cell, but is not limited thereto, according to an external shape thereof.

A plurality of battery cells may be arranged in a specific form to form a battery assembly. At least one battery assembly may be configured as various types of battery devices such as a battery module, a battery pack, and an energy storage system.

### SUMMARY

A conventional battery cell may include an electrode assembly accommodated in a cell case and an electrode terminal connected to each other by a current collector. The current collector may include a current collecting plate electrically connected to the electrode assembly and a current collecting pin electrically connected to the electrode terminal. The current collecting pin may be fitted into a coupling hole of the electrode terminal and then welded to the electrode terminal.

A portion at which the electrode terminal and the current collecting pin are welded may be melted and then solidified. In a process in which the welded portion between the electrode terminal and the current collecting pin is solidified, stress due to shrinkage may act on the welded portion, thereby causing cracking in the welded portion.

The present disclosure can be implemented in some embodiments to provide a current collector capable of absorbing or reducing stress occurring in a welded portion between the electrode terminal and a current collector (a current collector pin), and a battery cell having the same.

The present disclosure may be implemented in some embodiments to provide a current collector capable of preventing or reducing occurrence of cracking in a welded portion between an electrode terminal and a current collecting pin, and a battery cell having the same.

The present disclosure may be implemented in some embodiments to provide a current collector capable of improving quality of a welded portion of an electrode terminal and a current collecting pin, and a battery cell having the same.

The current collector according to the present disclosure and the battery cell having the same may be widely applied to devices within green technology fields such as an electric vehicle, a battery charging station, solar power generation using a battery, or wind power generation using a battery. In addition, the current collector of the present disclosure and the battery cell having the same may be used in an eco-friendly electric vehicle, a hybrid vehicle, but is not limited thereto, for suppressing air pollution and greenhouse gas emissions to ameliorate the effects of climate change.

In some embodiments of the present disclosure, provided is a battery cell including: an electrode assembly including a cathode, an anode, and a separator; a cell case accommodating the electrode assembly; a cap plate connected to the cell case; an electrode terminal disposed in the cap plate and including a coupling hole; and a current collector electrically connecting the electrode assembly and the electrode terminal, wherein the current collector includes a current collecting plate electrically connected to the electrode assembly and a current collecting pin connected to the current collecting plate and welded to the electrode terminal in a state of being fitted into the coupling hole, and the current collecting pin includes a hollow portion recessed toward the current collecting plate at a first end spaced apart from the current collecting plate.

In a cross-section perpendicular to a first direction in which the current collecting pin extends from the current collecting plate, an outer circumferential surface of the current collecting pin and an inner circumferential surface of the hollow portion may each have a circular cross-section.

The outer circumferential surface of the current collecting pin and the inner circumferential surface of the hollow portion may be concentric circles.

The electrode terminal may include a first body exposed on an outer surface of the cap plate and a second body connected to the first body and inserted into the through-hole of the cap plate.

The second body may have a rivet structure for coupling the cap plate to the first body.

The first body and the second body of the electrode terminal may be integrally formed as a single body and the electrode terminal may be rivet-coupled to the cap plate.

A thickness between an outer circumferential surface of the current collecting pin and an inner circumferential surface of the hollow portion may be 0.5 mm or more, and an inner diameter of the hollow portion may be 0.5 mm or more.

A depth of the hollow portion may be 0.1 times or more and 3 times or less an outer diameter of the current collecting pin.

A depth of the hollow portion may be set to be equal to or greater than a depth of a welded portion formed by solidification of molten metal during welding the electrode terminal and the current collecting pin.

The hollow portion may include, in at least a portion of a region from the first end of the current collecting pin toward the current collecting plate, a portion having an inner diameter smaller than an inner diameter at the first end of the current collecting pin.

The current collecting pin and the current collecting plate may be welded.

The current collecting pin may be inserted into and coupled to an insertion hole formed in the current collecting plate.

The current collecting pin may further include a diameter expansion portion disposed in a portion connected to the current collecting plate, and the diameter expansion portion may have a diameter greater than a surrounding portion of the diameter expansion portion.

The current collecting pin and the current collecting plate may be integrally formed as a single body.

In some embodiments of the present disclosure, provided is a current collector for a battery cell, the current collector including: a current collecting plate; and a current collecting pin connected to the current collecting plate, wherein the current collecting pin includes a hollow portion recessed toward the current collecting plate at a first end spaced apart from the current collecting plate.

In a cross-section perpendicular to a first direction in which the current collecting pin extends from the current collecting plate, an outer circumferential surface of the current collecting pin and an inner circumferential surface of the hollow portion may each have circular a cross-section, and the outer circumferential surface of the current collecting pin and the inner circumferential surface of the hollow portion may be concentric circles.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to a preferred embodiment.
FIG. 2 is an exploded perspective view of the battery cell illustrated in FIG. 1.
FIG. 3 is a longitudinal cross-sectional view taken along line I-I' of FIG. 1.
FIG. 4 is an exploded perspective view of a cap assembly according to a preferred embodiment.
FIG. 5 is a cross-sectional view of the cap assembly illustrated in FIG. 4.
FIG. 6 is a perspective view of a current collector according to a preferred embodiment.
FIG. 7 is a cross-sectional view of the current collector illustrated in FIG. 6.
FIG. 8 is a cross-sectional view illustrating a modified example of the current collector illustrated in FIG. 7.
FIG. 9 is a perspective view illustrating a state before the cap assembly and the current collector are coupled to each other according to a preferred embodiment.
FIG. 10 is a cross-sectional view taken along line II-II' of FIG. 1 and illustrating states before and after the cap assembly and the current collector are coupled to each other according to a preferred embodiment.
FIG. 11 is a cross-sectional view illustrating a force acting on a welded portion in a state in which an electrode terminal and the current collector are welded in the embodiment illustrated in FIG. 10.
FIG. 12A is a cross-sectional view illustrating a state in which a cap assembly and a current collector are coupled to each other according to a comparative example, and FIG. 12B is a cross-sectional view illustrating a force acting on a welded portion in a state in which an electrode terminal and the current collector are welded in the comparative example illustrated in FIG. 12A.
FIG. 13 is a cross-sectional view illustrating states before and after a cap assembly and a current collector are coupled to each other according to another preferred embodiment.
FIGS. 14 through 16 are cross-sectional views illustrating various modified examples of a hollow portion provided in the current collector.
FIG. 17 is a perspective view of a battery cell according to another preferred embodiment.
FIG. 18 is a perspective view of a battery cell according to another preferred embodiment.
FIG. 19 is a perspective view of a battery device according to a preferred embodiment.

### DETAILED DESCRIPTION

Features of the present disclosure disclosed in this patent document are described by example embodiments with reference to the accompanying drawings.

The present disclosure may be implemented in some embodiments to provide a current collector and a battery cell having the same.

Hereinafter, the present disclosure will be described in detail with reference to the accompanying drawings. However, the present disclosure is merely illustrative and is not limited to the specific embodiments exemplarily described.

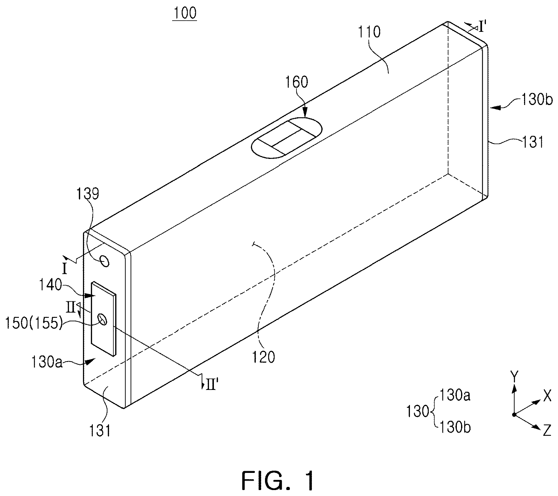

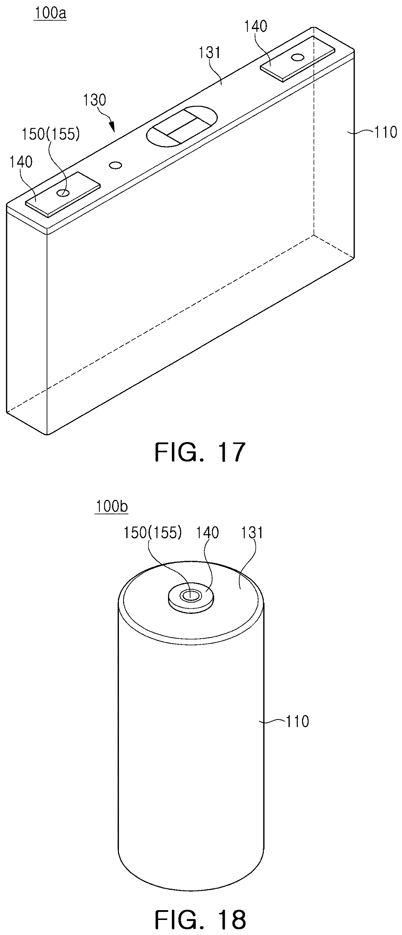

Hereinafter, a battery cell of the present disclosure is described with reference to FIGS. 1 through 18. In FIGS. 1 through 17, the battery cell of the present disclosure is described by taking a prismatic cell as an example. However, the battery cell of the present disclosure is not limited to the prismatic cell and may also be applied to a cylindrical cell as illustrated in FIG. 18.

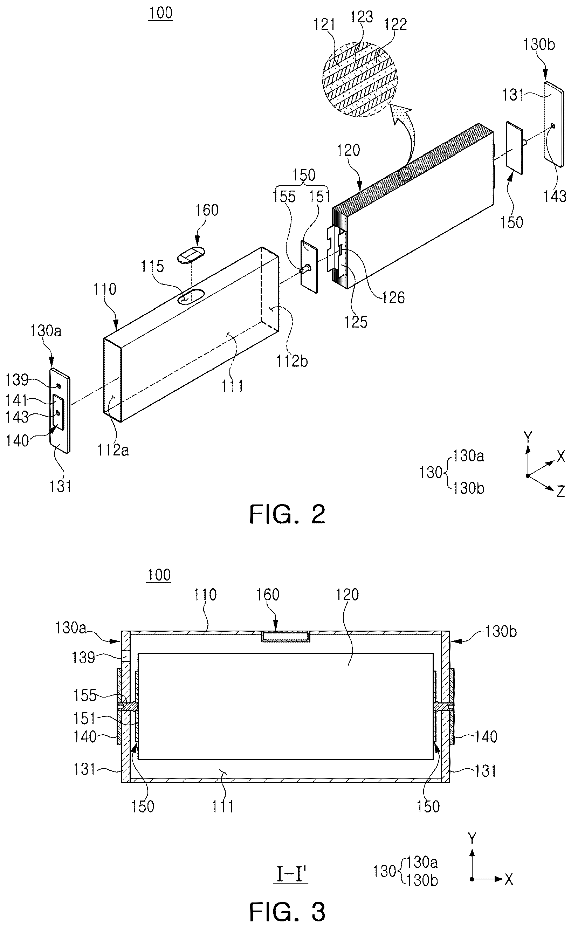

FIG. 1 is a perspective view of a battery cell 100 according to a preferred embodiment, FIG. 2 is an exploded perspective view of the battery cell 100 illustrated in FIG. 1, and FIG. 3 is a longitudinal cross-sectional view taken along line I-I' of FIG. 1.

Referring to FIGS. 1 through 3, the battery cell 100 according to a preferred embodiment may include an electrode assembly 120 including a cathode 121, an anode 122, and a separator 123, a cell case 110 accommodating the electrode assembly 120, a cap plate 131 connected to the cell case 110, an electrode terminal 140 disposed on the cap plate 131 and including a coupling hole 143, and a current collector 150 electrically connecting the electrode assembly 120 and the electrode terminal 140.

The cell case 110 and the cap plate 131 may form an exterior of the battery cell 100 and may form a space accommodating the electrode assembly 120.

The cell case 110 may form an accommodation space 111 accommodating the electrode assembly 120. For example, the cell case 110 may form the accommodation space 111 having a tube shape. In the case of a prismatic cell, the cell case 110 may have an extended rectangular cross-section.

The cell case 110 may have at least one of both ends that is open. For example, the cell case 110 may have a first opening 112a and a second opening 112b disposed at one side and the other side of the accommodation space 111, respectively. However, the cell case 110 may have only one of both ends of the cell case 110 that is open (see FIG. 17).

The electrode assembly 120 may include the cathode 121, the anode 122, and the separator 123. The cathode 121 and the anode 122 may be disposed while having the separator 123 interposed therebetween. For example, the electrode assembly 120 may have a wound structure in which the cathode 121, the anode 122, and the separator 123 are wound. However, the electrode assembly 120 of the present disclosure is not limited to the wound structure. For example, the electrode assembly 120 of the present disclosure may have a stacking shape, a zigzag-folding shape, or a stack-folding shape.

Each of the cathode 121 and the anode 122 may include an electrode tab 125. The electrode tab 125 may be defined as a region in which an active material is not coated for electrical connection with the current collector 150 in each of the cathode 121 and the anode 122. The electrode tab 125 may include a cathode tab disposed in the cathode 121 and an anode tab disposed in the anode 122.

The cap plate 131 may be connected to the cell case 110. The cap plate 131 may be connected to at least one of both ends of the tube-shaped cell case 110. The cap plate 131 may be manufactured separately from the cell case 110 and then may cover an open end of the cell case 110. For example, the cap plate 131 may be welded to the open end of the cell case 110. However, a connection structure between the cell case 110 and the cap plate 131 is not limited to the above-described structure, and, for example, the cap plate 131 and the cell case 110 may be integrally formed.

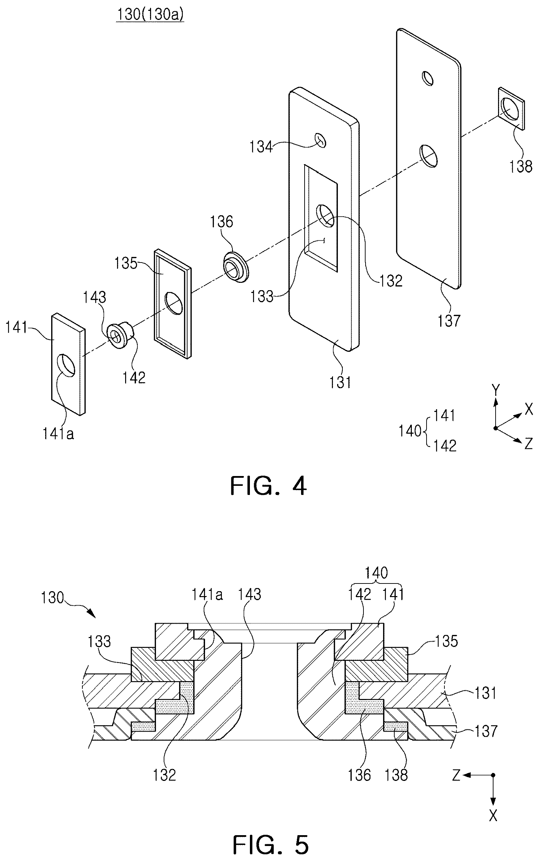

The cap plate 131 may include an electrolyte injection hole 134 (see FIG. 4) for injecting an electrolyte into the accommodation space 111 of the cell case 110. An electrolyte injection hole cover 139 closing the electrolyte injection hole 134 may be coupled to the cap plate 131.

The electrode terminal 140 may be disposed in the cap plate 131 and may include the coupling hole 143. The electrode terminal 140 may include a first body 141 exposed on an outer surface of the cap plate 131.

In the present disclosure, the "cap plate 131" may be defined as a plate on which the electrode terminal 140 is disposed. For example, when the electrode terminal 140 is disposed on at least one surface among a plurality of surfaces forming the exterior of the battery cell 100, a plate forming the surface on which the electrode terminal 140 is disposed may be referred to as the cap plate 131.

A cap assembly 130 may include the cap plate 131 and the electrode terminal 140. That is, the cap plate 131 and the electrode terminal 140 may be coupled to each other to form the cap assembly 130. The cap assembly 130 may be coupled to the cell case 110.

When both the ends of the cell case 110 are open, the cap assembly 130 may be coupled to each of both the ends of the cell case 110. For example, the cap assembly 130 may include a first cap assembly 130a coupled to the first opening 112a disposed at one side of the cell case 110 and a second cap assembly 130b coupled to the second opening 112b disposed at the other side of the cell case 110. Each of the first cap assembly 130a and the second cap assembly 130b may include the cap plate 131 and the electrode terminal 140.

The current collector 150 may electrically connect the electrode assembly 120 and the electrode terminal 140. The current collector 150 may include a current collecting plate 151 and a current collecting pin 155 connected to the current collecting plate 151. The current collector 150 may include the current collecting plate 151 electrically connected to the electrode assembly 120 and the current collecting pin 155 connected to the current collecting plate 151 and welded to the electrode terminal 140 in a state of being fitted into the coupling hole 143.

The current collecting plate 151 may have a plate shape and may be electrically connected to the electrode tab 125 of the electrode assembly 120. The current collecting plate 151 may be physically coupled to the electrode tab 125. For example, the electrode tab 125 may be bent to cover an outer surface of the current collecting plate 151, and the electrode tab 125 and the current collecting plate 151 may be welded in a state in which the electrode tab 125 covers the current collecting plate 151. For example, the electrode tab 125 and the current collecting plate 151 may be coupled by laser welding. However, a coupling structure and a coupling method between the electrode tab 125 and the current collecting plate 151 may be variously modified.

The current collecting pin 155 may have a pin shape extending from the current collecting plate 151 toward the electrode terminal 140. The current collecting pin 155 may protrude from the current collecting plate 151.

When the electrode tab 125 is bent to cover the outer surface of the current collecting plate 151, the electrode tab 125 may include a recess 126 to expose the current collector 150 outward from the electrode tab 125. For example, the recess 126 may have a notch shape or a groove shape in which a portion of the electrode tab 125 is cut.

The cell case 110 may include a vent hole 115, and a vent cover 160 may be coupled to the vent hole 115. For example, the vent cover 160 may be welded to the cell case 110 to cover the vent hole 115. However, a structure of the vent cover 160 is not limited to a structure attached to the vent hole 115, and the vent cover 160 may also be directly formed on a surface of the cell case 110 through machining, etching, but is not limited thereto.

Although FIGS. 1 through 3 illustrate that the vent hole 115 and the vent cover 160 are disposed in the cell case 110, the vent hole 115 and the vent cover 160 may also be disposed in the cap plate 131 (see FIG. 17).

FIG. 4 is an exploded perspective view of the cap assembly 130 according to a preferred embodiment, and FIG. 5 is a cross-sectional view of the cap assembly 130 illustrated in FIG. 4. FIGS. 4 and 5 illustrate an exploded perspective view of the first cap assembly 130a illustrated in FIG. 2, and the second cap assembly 130b illustrated in FIG. 2 may also have a structure identical or similar to that of the first cap assembly 130a.

The cap assembly 130 is described with reference to FIGS. 4 and 5 together with FIG. 2. The cap assembly 130 may include the cap plate 131 and the electrode terminal 140 and may further include at least one of a terminal insulator 135, a gasket 136, a cap insulator 137, and a fixing plate 138.

The cap plate 131 may cover the open end of the cell case 110. The cap plate 131 may include a seating groove 133 in which the electrode terminal 140 is seated. The cap plate 131 may include a through-hole 132 for installation of the electrode terminal 140. The through-hole 132 may be disposed at the center of the seating groove 133.

The cap plate 131 may further include the electrolyte injection hole 134 for injecting an electrolyte into the accommodation space 111 of the cell case 110.

The electrode terminal 140 may include the first body 141 exposed on the outer surface of the cap plate 131 and a second body 142 connected to the first body 141 and inserted into the through-hole 132 of the cap plate 131. The first body 141 and the second body 142 may be manufactured separately and then coupled to each other. However, the first body 141 and the second body 142 may also be integrally formed.

The first body 141 may be exposed on the outer surface of the cap plate 131 and may be provided for electrical connection with the adjacent battery cell 100. For example, at least a portion of the first body 141 may have a plate shape. However, the first body 141 is not limited thereto. The first body 141 may be disposed in the seating groove 133 of the cap plate 131. The first body 141 may include a terminal hole 141a provided in a central region for installation of the second body 142.

The second body 142 may include the coupling hole 143 into which the current collecting pin 155 of the current collector 150 is inserted. For example, the coupling hole 143 may have a circular cross-section.

The second body 142 may be connected to the first body 141 through the terminal hole 141a of the first body 141. The second body 142 may couple the first body 141 and the cap plate 131 after being inserted into the terminal hole 141a of the first body 141 and the through-hole 132 of the cap plate 131. For example, the second body 142 may fix the first body 141 and the cap plate 131 by applying pressure thereto.

The second body 142 may have a rivet structure for coupling the cap plate 131 to the first body 141. In a state in which the second body 142 is inserted into the terminal hole 141a of the first body 141 and the through-hole 132 of the cap plate 131, at least one of an outer end and an inner end of the second body 142 may be press-deformed outward. The second body 142 may be press-deformed to fix the cap plate 131 and the first body 141.

The terminal insulator 135 may be disposed between the cap plate 131 and the electrode terminal 140 to electrically insulate the cap plate 131 from the electrode terminal 140. The terminal insulator 135 may be formed of an insulating material to electrically insulate the cap plate 131 from the first body 141. The terminal insulator 135 may have sealing properties to seal a space between the cap plate 131 and the first body 141.

The gasket 136 sealing a space between the cap plate 131 and the electrode terminal 140 may be disposed between the through-hole 132 of the cap plate 131 and the electrode terminal 140. The gasket 136 may be fitted into the through-hole 132 of the cap plate 131 and may seal a space between the through-hole 132 and the second body 142. The gasket 136 may seal a space between the electrode terminal 140 and the through-hole 132, thereby preventing a material inside the battery cell 100 from leaking outside the battery cell 100 or a material outside the battery cell 100 from being introduced into the battery cell 100. The gasket 136 may also serve to electrically insulate the electrode terminal 140 from the cap plate 131.

The gasket 136 may include a compressible insulating material for sealing and insulation. For example, the material of the gasket 136 may include at least one of polybutylene terephthalate (PBT) or perfluoroalkoxy alkane (PFA).

In a state in which the terminal insulator 135 and/or the gasket 136 is disposed between the cap plate 131 and the electrode terminal 140, the electrode terminal 140 and the cap plate 131 may be clinch-coupled.

Although FIGS. 4 and 5 illustrate that the terminal insulator 135 and the gasket 136 are separated from each other, the terminal insulator 135 and the gasket 136 may also have an integrated structure formed as a single member.

The cap insulator 137 electrically insulating the cap plate 131 from the current collector 150 or the electrode assembly 120 may be disposed on an inner surface of the cap plate 131.

The fixing plate 138 for protecting the cap insulator 137 when an inner portion of the second body 142 is press-deformed may be disposed between the cap plate 131 and the second body 142. The fixing plate 138 may be formed of a metal material. The fixing plate 138 may be formed of a rigid material to minimize deformation during clinch coupling.

FIGS. 4 and 5 illustrate an example of the cap assembly 130, and a shape or a structure of the first body 141, a shape or a structure of the second body 142, and a position, a shape, and a structure of a portion press-deformed in the second body 142 may be variously modified. In addition, the cap assembly 130 may not include at least one of the terminal insulator 135, the gasket 136, the cap insulator 137, and the fixing plate 138, and a shape or an arrangement structure of the terminal insulator 135, the gasket 136, the cap insulator 137, and the fixing plate 138 disposed in the cap assembly 130 may also be variously modified.

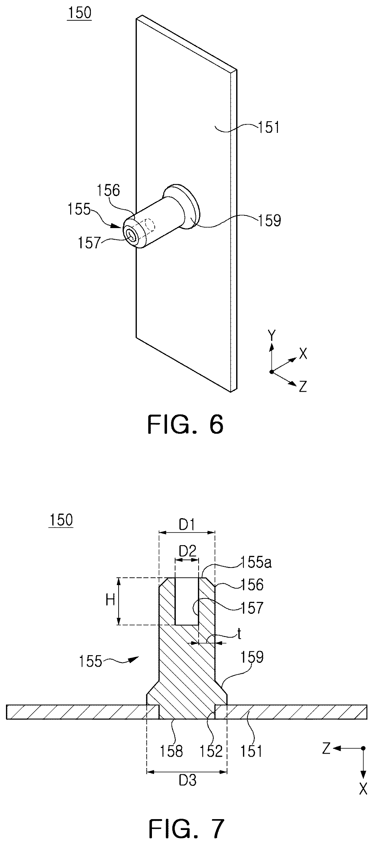

FIG. 6 is a perspective view of the current collector 150 according to a preferred embodiment. FIG. 7 is a cross-sectional view of the current collector 150 illustrated in FIG. 6.

The current collector 150 is described with reference to FIGS. 6 and 7 together with FIG. 5.

The current collector 150 may include the current collecting plate 151 and the current collecting pin 155. The current collecting plate 151 may have a plate shape and may be electrically connected to the electrode assembly 120 (see FIG. 2). The current collecting pin 155 may be connected to the current collecting plate 151 and may extend in a direction perpendicular to the surface of the current collecting plate 151.

The current collecting pin 155 and the current collecting plate 151 may be manufactured separately and then coupled to each other to form the current collector 150. For example, the current collecting pin 155 and the current collecting plate 151 may be welded. A portion in which the current collecting pin 155 and the current collecting plate 151 are in contact with each other may be melted and then be hardened by welding, thereby forming a physically stable coupling state. In this case, current transfer may be smoothly performed through the portion in which the current collecting pin 155 and the current collecting plate 151 are welded, thereby stably securing a current flow from the electrode assembly 120 to the electrode terminal 140. However, a coupling manner between the current collecting pin 155 and the current collecting plate 151 is not limited to welding.

The current collecting pin 155 may be inserted into and coupled to an insertion hole 152 formed in the current collecting plate 151. For example, the current collecting pin 155 may include a coupling portion 158 at an end adjacent to the current collecting plate 151, and the coupling portion 158 of the current collecting pin 155 may be fitted into the insertion hole 152 of the current collecting plate 151.

The current collecting pin 155 and the current collecting plate 151 may be welded to each other in a state in which the coupling portion 158 is fitted into the insertion hole 152. FIG. 7 illustrates that the coupling portion 158 of the current collecting pin 155 is fitted into the insertion hole 152 from an upper side of the current collecting plate 151. However, a shape or a coupling manner of the current collecting pin 155 and the current collecting plate 151 may be variously modified. For example, the current collecting pin 155 may be inserted into the insertion hole 152 from a lower side of the current collecting plate 151.

The current collecting pin 155 may include a hollow portion 157 recessed toward the current collecting plate 151 at a first end 155a spaced apart from the current collecting plate 151. The hollow portion 157 may have an open upper portion. The hollow portion 157 may correspond to an empty space formed in the current collecting pin 155. The hollow portion 157 may be recessed to a predetermined depth H from the first end 155a of the current collecting pin 155. The hollow portion 157 may serve to disperse a force applied to the current collecting pin 155. For example, the hollow portion 157 may absorb shrinkage stress acting on the current collecting pin 155 when the current collecting pin 155 is melted and then solidified during a welding process. When the hollow portion 157 is formed in the current collecting pin 155, a body of the current collecting pin 155 may be minutely deformed when stress acts around the hollow portion 157, thereby minimizing stress acting on the current collecting pin 155 or around the current collecting pin 155.

In a cross-section perpendicular to a first direction (X-axis direction) in which the current collecting pin 155 extends from the current collecting plate 151, an outer circumferential surface of the current collecting pin 155 and an inner circumferential surface of the hollow portion 157 may each have circular a cross-section. When the outer circumferential surface of the current collecting pin 155 has the circular cross-section, the coupling hole 143 (see FIG. 5) of the electrode terminal 140 into which the current collecting pin 155 is inserted may also have a circular cross-section. When the hollow portion 157 has the circular cross-section, the hollow portion 157 may be easily formed in the current collecting pin 155 by using a rotary tool such as a drill.

When the outer circumferential surface of the current collecting pin 155 and the inner circumferential surface of the hollow portion 157 each have the circular cross-sections, the outer circumferential surface of the current collecting pin 155 may have an outer diameter D1 of a first diameter, and the inner circumferential surface of the hollow portion 157 may have an inner diameter D2 of a second diameter.

The outer circumferential surface of the current collecting pin 155 and the inner circumferential surface of the hollow portion 157 may be concentric circles. When the center of the current collecting pin 155 and the center of the hollow portion 157 are identical to each other, a thickness t between the outer circumferential surface of the current collecting pin 155 and the inner circumferential surface of the hollow portion 157 may be uniform. Accordingly, the hollow portion 157 may uniformly absorb stress acting on the current collecting pin 155 when the current collecting pin 155 is welded thereto.

A chamfer-shaped inclined surface may be formed between the first end 155a and a side surface of the current collecting pin 155. A rim portion 156 may be disposed at a portion at which the inclined surface and the side surface of the current collecting pin 155 meet each other. The rim portion 156 may be defined as a boundary portion at which the current collecting pin 155 and the electrode terminal 140 (see FIG. 2) are in contact with each other.

The current collecting pin 155 may further include a diameter expansion portion 159 disposed in at a portion connected to the current collecting plate 151, and the diameter expansion portion 159 has a diameter greater than a surrounding portion of the diameter expansion portion 159. The diameter expansion portion 159 may have a cross-sectional area greater than that of the surrounding portion. When the current collecting pin 155 and the electrode terminal 140 are welded, welding heat may be dispersed, thereby preventing or reducing damage to the electrode assembly 120 due to the welding heat.

In addition, when current flows through the current collecting pin 155 during use of the battery cell 100, resistance may increase at a portion at which the pin and the current collecting plate 151 are connected to each other and heat occurrence may thus increase. In such a case, a temperature of the portion at which the current collecting pin 155 and the current collecting plate 151 are connected to each other may increase and adversely affect the electrode assembly 120. As in the embodiment, when the diameter expansion portion 159 is formed in the current collecting pin 155, a cross-sectional area of the current collecting pin 155 may increase at the portion connected to the current collecting plate 151, thereby reducing resistance and heat occurrence and reducing a temperature increase in the current collecting pin 155.

An outer diameter D3 of the diameter expansion portion 159 may be greater than the outer diameter D1 of the outer circumferential surface of the current collecting pin 155. The outer diameter D3 or a height of the diameter expansion portion 159 may be set in consideration of an amount of heat occurrence during welding or use.

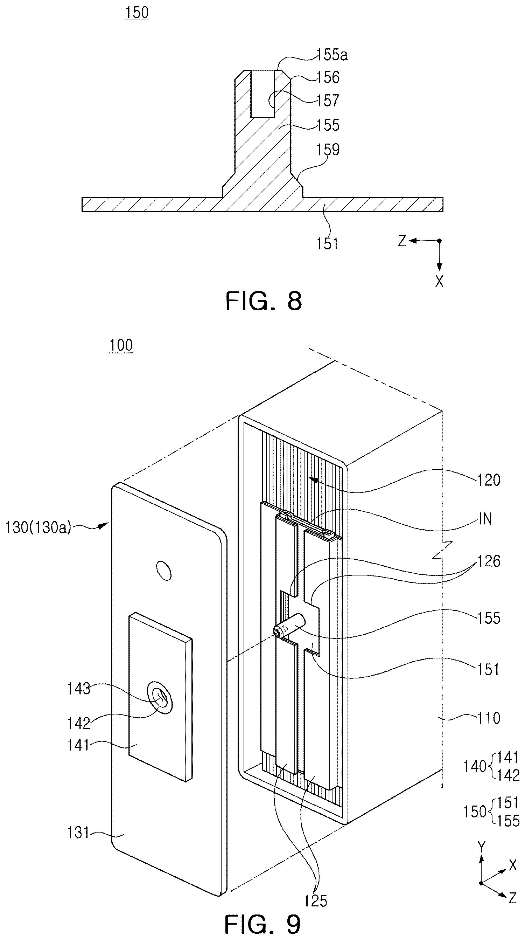

FIG. 8 is a cross-sectional view illustrating a modified example of the current collector 150 illustrated in FIG. 7.

Compared with the current collector 150 illustrated in FIG. 7, the current collector 150 illustrated in FIG. 8 is different in that the current collecting plate 151 and the current collecting pin 155 are integrally formed. The description provided with reference to FIGS. 6 and 7, excluding the differences, may also be applied to the description provided with reference to FIG. 8.

In the current collector 150 illustrated in FIG. 8, the current collecting pin 155 and the current collecting plate 151 may be integrally formed as a single body. That is, the current collecting pin 155 and the current collecting plate 151 may be integrally molded through forging but is not limited thereto.

When forging is performed, the current collecting plate 151 having a smaller thickness and the current collecting pin 155 having a greater thickness may be integrally molded. After forging is performed, the recessed hollow portion 157 may be formed at the first end 155a of the current collecting pin 155 by cutting. When the current collecting pin 155 and the current collecting plate 151 are integrally formed as a single member, the number of components included in the current collector 150 may decrease, thereby facilitating manufacturing of the battery cell 100.

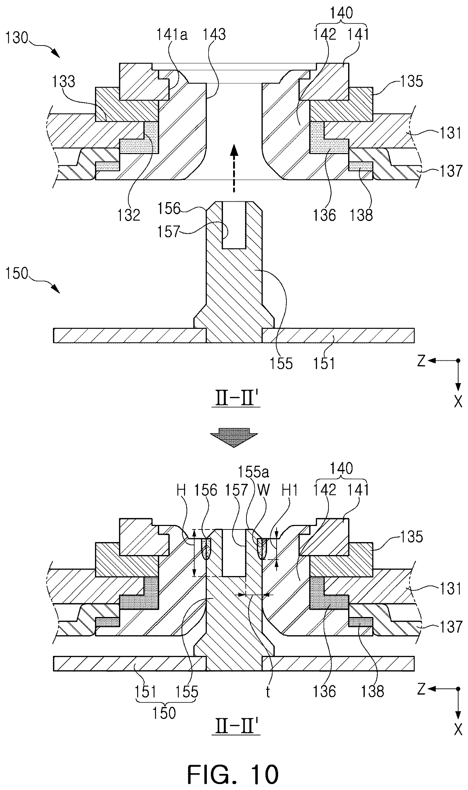

FIG. 9 is a perspective view illustrating a state before the cap assembly 130 and the current collector 150 are coupled to each other according to a preferred embodiment. FIG. 10 is a cross-sectional view taken along line II-II' of FIG. 1 and illustrating states before and after the cap assembly 130 and the current collector 150 are coupled to each other according to a preferred embodiment

Referring to FIGS. 9 and 10, the cap assembly 130 may have the electrode terminal 140 and the cap plate 131 coupled to each other. The electrode terminal 140 may include the first body 141 exposed outward and the second body 142 connected to the first body 141. The second body 142 may have a rivet structure for coupling the cap plate 131 to the first body 141. The description provided with reference to FIG. 5 may be applied to a structure of the cap assembly 130.

The current collector 150 may include the current collecting plate 151 and the current collecting pin 155. The current collecting plate 151 may be electrically connected to the electrode assembly 120 accommodated in the cell case 110. For example, the electrode tab 125 of the electrode assembly 120 may be welded to the current collecting plate 151 while covering the outer surface of the current collecting plate 151. The recess 126 may be formed in the electrode tab 125 to prevent the electrode tab 125 from interfering with the current collecting pin 155 when the electrode tab 125 covers the outer surface of the current collecting plate 151. A current collecting insulator IN may be disposed between an inner surface of the current collecting plate 151 and the electrode assembly 120 to insulate the current collecting plate 151 from a body portion of the electrode assembly 120.

In a state in which the electrode assembly 120 and the current collector 150 are coupled to each other, the electrode assembly 120 may be accommodated in the cell case 110. The cap assembly 130 may cover the open end of the cell case 110. The cap assembly 130 and the cell case 110 may be welded at a contact portion and coupled to each other.

As the cap assembly 130 approaches the cell case 110, the current collecting pin 155 of the current collector 150 may be fitted into the coupling hole 143 of the electrode terminal 140. The current collecting pin 155 may be welded to the electrode terminal 140 in a state of being fitted into the coupling hole 143 of the electrode terminal 140. The current collecting pin 155 may be welded to the second body 142 of the electrode terminal 140.

A welded portion W may be formed by solidification of molten metal during welding of the electrode terminal 140 and the current collecting pin 155. A welded portion W may be formed along the rim portion 156 that is the boundary between the current collecting pin 155 and the electrode terminal 140. A depth H1 of the welded portion W may be defined as a depth of a portion solidified after the current collecting pin 155 and the electrode terminal 140 are melted by welding.

Shrinkage stress may act on the welded portion W in a process in which molten metal is solidified and shrinks. The hollow portion 157 of the current collecting pin 155 may absorb stress acting on the welded portion W. When the hollow portion 157 is formed in the current collecting pin 155, the body of the current collecting pin 155 may be minutely deformed around the hollow portion 157 during solidification shrinkage of molten metal, thereby minimizing stress applied to the welded portion W. Accordingly, welding defects may be reduced by minimizing cracking occurring in the welded portion W.

The depth H of the hollow portion 157 may be 0.1 times or more and 3 times or less the outer diameter D1 of the current collecting pin 155. The depth H of the hollow portion 157 may be 0.1 times or more, 0.2 times or more, 0.3 times or more, 0.4 times or more, or 0.5 times or more the outer diameter D1 of the current collecting pin 155. The depth H of the hollow portion 157 may be 3 times or less, 2.5 times or less, 2 times or less, 1.5 times or less, or 1 time or less the outer diameter D1 of the current collecting pin 155.

Across an overall height of the welded portion W, stress acting on the welded portion W may be relatively large at an outer portion of the welded portion W. Therefore, even when the hollow portion 157 is formed to have a low depth in a portion adjacent to the first end 155a of the current collecting pin 155, stress acting on the welded portion W may be dispersed. When the depth H of the hollow portion 157 is less than 0.1 times the outer diameter D1 of the current collecting pin 155, a size of the hollow portion 157 may be excessively small and it may thus be difficult to sufficiently absorb stress acting on the welded portion W.

Conversely, when the depth H of the hollow portion 157 exceeds 3 times the outer diameter D1 of the current collecting pin 155, rigidity of the current collecting pin 155 may decrease and deformation may increase in a portion at which the hollow portion 157 is formed during welding of the current collecting pin 155.

The depth H of the hollow portion 157 may be set to be equal to or greater than the depth H1 of the welded portion W. The depth H of the hollow portion 157 equal to or greater than the depth H1 of the welded portion W may be defined as the depth H of the hollow portion 157 being set to have the welded portion W and the hollow portion 157 overlapping each other when the welded portion W is projected onto a direction perpendicular to the direction (X-axis direction) in which the current collecting pin 155 extends.

When the depth H of the hollow portion 157 is equal to or greater than the depth H1 of the welded portion W, the body of the current collecting pin 155 may be minutely deformed around the hollow portion 157 over an overall height of the welded portion W, thereby mitigating stress acting on the welded portion W by the hollow portion 157.

The thickness t between the outer circumferential surface of the current collecting pin 155 and the inner circumferential surface of the hollow portion 157, and the inner diameter D2 of the hollow portion 157 are described with reference to FIGS. 9 and 10 together with FIG. 7.

The thickness t between the outer circumferential surface of the current collecting pin 155 and the inner circumferential surface of the hollow portion 157 may be 0.5 mm or more. When the thickness t between the outer circumferential surface of the current collecting pin 155 and the inner circumferential surface of the hollow portion 157 is less than 0.5 mm, most of the first end 155a of the current collecting pin 155 may be melted by welding, thereby causing welding defects. The thickness t between the outer circumferential surface of the current collecting pin 155 and the inner circumferential surface of the hollow portion 157 may be smaller than a radius of the current collecting pin 155.

The inner diameter D2 of the hollow portion 157 may be 0.5 mm or more. When the inner diameter D2 of the hollow portion 157 is less than 0.5 mm, a size of the hollow portion 157 may be excessively small and it may thus be difficult to sufficiently absorb stress acting on the welded portion W. The inner diameter D2 of the hollow portion 157 may be smaller than the outer diameter D1 of the current collecting pin 155.

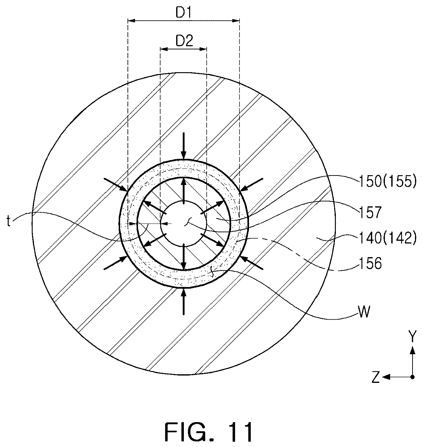

FIG. 11 is a cross-sectional view illustrating a force acting on the welded portion W in a state in which the electrode terminal 140 and the current collector 150 are welded in the embodiment illustrated in FIG. 10.

Referring to FIG. 11, the second body 142 of the electrode terminal 140 and the current collecting pin 155 of the current collector 150 may be welded to form the welded portion W. The outer circumferential surface of the current collecting pin 155 may have a circular cross-section having the outer diameter D1 of the first diameter, and the hollow portion 157 of the current collecting pin 155 may have a circular cross-section having the inner diameter D2 of the second diameter.

The welded portion W may be formed as metal is solidified after being melted by welding. Stress due to shrinkage may act on the welded portion W in a solidification process of metal. The hollow portion 157 may be formed as an empty space in a central region of the current collecting pin 155, and the hollow portion 157 may thus absorb stress acting on the welded portion W. That is, the hollow portion 157 may provide a space in which a portion disposed between the rim portion 156 and the hollow portion 157 in the current collecting pin 155 and the welded portion W is deformable toward a central direction of the current collecting pin 155. Therefore, the hollow portion 157 may prevent cracking from occurring in the welded portion W or a boundary portion of the welded portion W due to stress acting on the welded portion W.

The outer circumferential surface of the current collecting pin 155 may have a circular cross-section having the outer diameter D1 of the first diameter, and the hollow portion 157 of the current collecting pin 155 may have a circular cross-section having the inner diameter D2 of the second diameter. The welded portion W may be formed in a ring shape along the rim portion 156 that is the boundary between the current collecting pin 155 and the electrode terminal 140.

When the outer circumferential surface of the current collecting pin 155 and the inner circumferential surface of the hollow portion 157 are concentric circles, a thickness of the current collecting pin 155 is uniform around the hollow portion 157, and stress acting on the current collecting pin 155 may be uniformly absorbed by the hollow portion 157 over an overall circumference of the hollow portion 157.

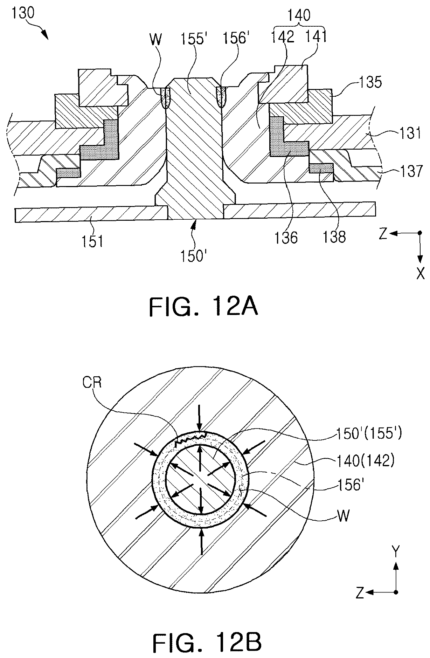

FIG. 12A is a cross-sectional view illustrating a state in which the cap assembly 130 and the current collector 150' are coupled to each other according to a comparative example, and FIG. 12B is a cross-sectional view illustrating a force acting on the welded portion W in a state in which the electrode terminal 140 and the current collector 150' are welded in the comparative example illustrated in FIG. 12A.

Compared with the embodiments illustrated in FIGS. 10 and 11, the comparative example illustrated in FIGS. 12A and 12B differs only in that the hollow portion 157 (see FIG. 10) is not formed in a current collecting pin 155' of the current collector 150'. That is, in the comparative example illustrated in FIGS. 12A and 12B, the cap assembly 130 is identical to the cap assembly 130 illustrated in FIGS. 10 and 11, and the current collecting pin 155' may not include the hollow portion 157.

In the comparative example illustrated in FIGS. 12A and 12B, the welded portion W may be formed in the ring shape along the rim portion 156 that is the boundary between the current collecting pin 155' and the electrode terminal 140. Stress due to shrinkage may act on the welded portion W in the solidification process of metal after welding. In the comparative example, an inner side of the welded portion W may be formed as a closed section and high shrinkage stress may thus act on the welded portion W. In such a case, cracking CR may occur in a portion of the welded portion W in which stress is concentrated. Such cracking may not only degrade quality of the welded portion W but also may make coupling and electrical connection between the current collecting pin 155' and the electrode terminal 140 unstable when the cracking CR increase.

On the other hand, according to the embodiment of the present disclosure, as in an example illustrated in FIGS. 10 and 11, the hollow portion 157 may be formed in the current collecting pin 155, thereby preventing defects such as cracking CR from occurring in the welded portion W.

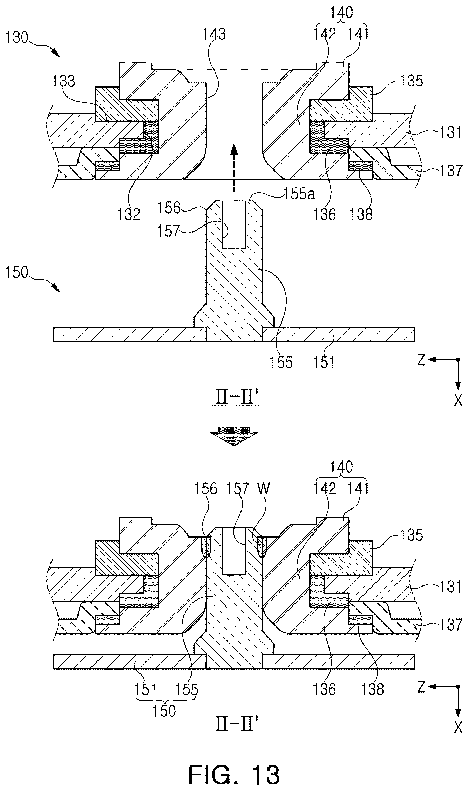

FIG. 13 is a cross-sectional view illustrating states before and after the cap assembly 130 and the current collector 150 are coupled to each other according to another preferred embodiment.

Compared with the embodiments described with reference to FIGS. 1 through 11, another preferred embodiment illustrated in FIG. 13 is different only in that the first body 141 and the second body 142 of the electrode terminal 140 are integrally formed. The description provided with reference to FIGS. 1 through 11, excluding the differences, may also be applied to the description provided with reference to FIG. 13.

The first body 141 and the second body 142 of the electrode terminal 140 are integrally formed as a single body and the electrode terminal 140 may be rivet-coupled to the cap plate 131.

The first body 141 may be a portion exposed on the outer surface of the cap plate 131, and the second body 142 may be a portion inserted into the through-hole 132 of the cap plate 131, and the first body 141 and the second body 142 may be integrally formed as a single member.

When the first body 141 and the second body 142 are integrally formed, the electrode terminal 140 may function as a rivet-type electrode terminal having a rivet function by itself. In the embodiment illustrated in FIG. 13, the electrode terminal 140 may clinch at least one of the outer surface or the inner surface of the cap plate 131.

At least one of the terminal insulator 135, the gasket 136, the cap insulator 137, and the fixing plate 138 may be disposed between the electrode terminal 140 and the cap plate 131, and the electrode terminal 140 may form a rivet structure for simultaneously clinching and coupling components disposed between the electrode terminal 140 and the cap plate 131.

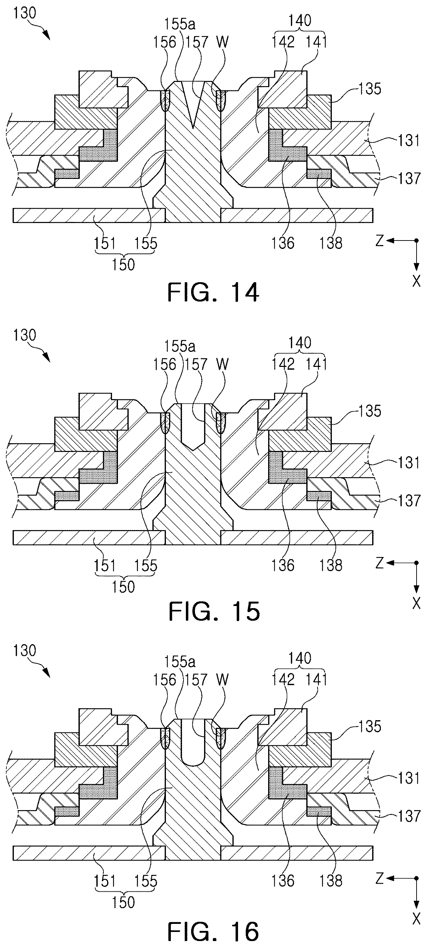

FIGS. 14 through 16 are cross-sectional views illustrating various modified examples of the hollow portion 157 provided in the current collector 150.

Compared with the embodiments illustrated in FIGS. 1 through 11, the modified examples illustrated in FIGS. 14 through 16 differ in a shape of the hollow portion 157 provided in the current collecting pin 155. Descriptions other than differences provided with reference to FIGS. 1 through 11 may be applied to the modified examples illustrated in FIGS. 14 through 16. In addition, the descriptions provided with reference to FIG. 13 may also be applied to the modified examples illustrated in FIGS. 14 through 16.

In the embodiments illustrated in FIGS. 14 through 16, the current collecting pin 155 may have the hollow portions 157 having various shapes. The hollow portion 157 may include, in at least a portion of a region from the first end 155a of the current collecting pin 155 toward the current collecting plate 151, a portion having an inner diameter smaller than the inner diameter D2 at the first end 155a of the current collecting pin 155.

Referring to FIG. 14, the hollow portion 157 may have the inner diameter D2 that gradually decreases. For example, the hollow portion 157 of FIG. 14 may include a cone shape or a truncated cone shape.

Referring to FIG. 15, the hollow portion 157 may include an upper portion having a constant diameter and a lower portion having a decreased diameter. The lower portion of the hollow portion 157 may include a cone shape or a truncated cone shape.

Referring to FIG. 16, the hollow portion 157 may include an upper portion having a constant diameter and a lower portion having a rounded cross-section. The lower portion of the hollow portion 157 may have an arc-shaped cross-section.

FIG. 17 is a perspective view of a battery cell 100a according to another preferred embodiment.

Unlike the embodiments illustrated in FIGS. 1 through 11, the battery cell 100a illustrated in FIG. 17 is different in a shape of the cell case 110 and an arrangement structure of the cap assembly 130.

In another preferred embodiment illustrated in FIG. 17, the battery cell 100a may include the cell case 110 having one side open and the cap assembly 130 covering an open one side end of the cell case 110. The cap assembly 130 may include the cap plate 131 and two electrode terminals 140 disposed in the cap plate 131. In the battery cell 100a according to another preferred embodiment, the two electrode terminals 140 may be disposed in one cap plate 131. In a state in which the current collecting pin 155 is fitted into each electrode terminal 140, the current collecting pin 155 may be welded to the electrode terminal 140.

A connection structure between the current collecting pin 155 of the current collector 150 and the electrode terminal 140 described with reference to FIGS. 1 through 11 and 13 through 16 may also be applied to the battery cell 100a having the two electrode terminals 140 disposed to face the same direction.

FIG. 18 is a perspective view of a battery cell 100b according to another preferred embodiment.

Unlike the embodiments illustrated in FIGS. 1 through 11, the battery cell 100b illustrated in FIG. 18 is different in that the battery cell 100b is configured as a cylindrical cell.

Also in the case of the cylindrical battery cell 100b, the cylindrical battery cell 100b may include the electrode terminal 140 and the cap plate 131 in which the electrode terminal 140 is disposed. The cap plate 131 may be formed separately from the cell case 110. However, the cap plate 131 may also be integrally formed with the cell case 110. In a state in which the current collecting pin 155 is fitted into the electrode terminal 140, the current collecting pin 155 may be welded to the electrode terminal 140.

The connection structure between the current collecting pin 155 of the current collector 150 and the electrode terminal 140 described with reference to FIGS. 1 through 11 and 13 through 16 may also be applied to the cylindrical battery cell 100b.

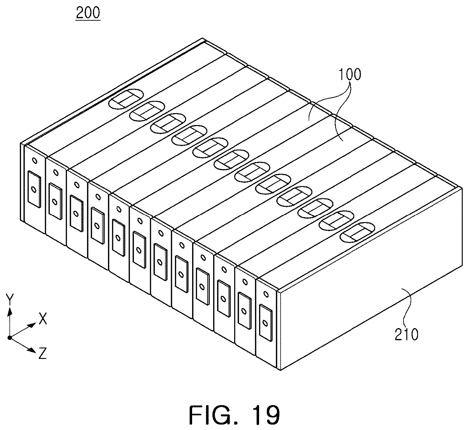

FIG. 19 is a perspective view of a battery device 200 according to a preferred embodiment.

The battery device 200 illustrated in FIG. 19 may include the plurality of battery cells 100. The battery cells 100 may be arranged in a predetermined form to form a cell assembly. For example, the battery cell 100 described with reference to FIGS. 1 through 11 may be applied to the battery cell 100.

The battery device 200 may include a side plate 210 covering at least one surface of the plurality of battery cells 100 to protect the plurality of battery cells 100. The side plate 210 may be provided as a part of a device housing of the battery device 200. For example, the side plates 210 may be disposed at both ends of the plurality of battery cells 100. However, the side plate 210 or the device housing may be applied in various forms.

As set forth above, according to a preferred embodiment of the present disclosure, stress occurring in the welded portion between the electrode terminal and the current collector (current collecting pin) may be reduced.

According to a preferred embodiment of the present disclosure, occurrence of cracking in the welded portion between the electrode terminal and the current collecting pin may be prevented or reduced.

According to a preferred embodiment of the present disclosure, quality of the welded portion of the electrode terminal and the current collecting pin may be improved.

## Claims

1. A battery cell comprising:
an electrode assembly including a cathode, an anode, and a separator;
a cell case accommodating the electrode assembly;
a cap plate connected to the cell case;
an electrode terminal disposed in the cap plate and including a coupling hole; and
a current collector electrically connecting the electrode assembly and the electrode terminal,
wherein the current collector includes a current collecting plate electrically connected to the electrode assembly and a current collecting pin connected to the current collecting plate and welded to the electrode terminal in a state of being fitted into the coupling hole, and
the current collecting pin includes a hollow portion recessed toward the current collecting plate at a first end spaced apart from the current collecting plate.

2. The battery cell of claim 1, wherein, in a cross-section perpendicular to a first direction in which the current collecting pin extends from the current collecting plate, an outer circumferential surface of the current collecting pin and an inner circumferential surface of the hollow portion each have a circular cross-section.

3. The battery cell of claim 2, wherein the outer circumferential surface of the current collecting pin and the inner circumferential surface of the hollow portion are concentric circles.

4. The battery cell of any one of claims 1 to 3, wherein the electrode terminal includes a first body exposed on an outer surface of the cap plate and a second body connected to the first body and inserted into a through-hole of the cap plate.

5. The battery cell of claim 4, wherein the second body has a rivet structure for coupling the cap plate to the first body.

6. The battery cell of claim 4, wherein the first body and the second body of the electrode terminal are integrally formed as a single body and the electrode terminal is rivet-coupled to the cap plate.

7. The battery cell of any one of claims 1 to 6, wherein a thickness between an outer circumferential surface of the current collecting pin and an inner circumferential surface of the hollow portion is 0.5 mm or more, and
an inner diameter of the hollow portion is 0.5 mm or more.

8. The battery cell of any one of claims 1 to 7, wherein a depth of the hollow portion is 0.1 times or more and 3 times or less an outer diameter of the current collecting pin.

9. The battery cell of any one of claims 1 to 8, wherein a depth of the hollow portion is set to be equal to or greater than a depth of a welded portion formed by solidification of molten metal during welding the electrode terminal and the current collecting pin.

10. The battery cell of any one of claims 1 to 9, wherein the hollow portion includes, in at least a portion of a region from the first end of the current collecting pin toward the current collecting plate, a portion having an inner diameter smaller than an inner diameter at the first end of the current collecting pin.

11. The battery cell of any one of claims 1 to 10, wherein the current collecting pin and the current collecting plate are welded, and/or
wherein the current collecting pin is inserted into and coupled to an insertion hole formed in the current collecting plate.

12. The battery cell of any one of claims 1 to 11, wherein the current collecting pin further includes a diameter expansion portion disposed in a portion connected to the current collecting plate, and the diameter expansion portion has a diameter greater than a surrounding portion of the diameter expansion portion.

13. The battery cell of any one of claims 1 to 12, wherein the current collecting pin and the current collecting plate are integrally formed as a single body.

14. A current collector for a battery cell, the current collector comprising:
a current collecting plate; and
a current collecting pin connected to the current collecting plate,
wherein the current collecting pin includes a hollow portion recessed toward the current collecting plate at a first end spaced apart from the current collecting plate.

15. The current collector of claim 14, wherein, in a cross-section perpendicular to a first direction in which the current collecting pin extends from the current collecting plate, an outer circumferential surface of the current collecting pin and an inner circumferential surface of the hollow portion each have circular a cross-section, and
the outer circumferential surface of the current collecting pin and the inner circumferential surface of the hollow portion are concentric circles.
